# EUROPÄISCHE PATENTSCHRIFT

(11) **EP 3 119 825 B1**
(45) Veröffentlichungstag und Bekanntmachung des Hinweises auf die Patenterteilung: **27.12.2017**
(21) Anmeldenummer: 15710488.6
(22) Anmeldetag: 17.03.2015
(51) Int. Cl.: C08G 18/48, C08G 18/24, C08G 18/18, B29C 33/38, C08G 18/40, B29C 67/24, B29C 33/56, C08G 18/61

(54) **VERFAHREN ZUR HERSTELLUNG EINES POLYURETHANFORMTEILES**
PROCESS FOR PREPARING A MOULDED POLYURETHANE PART
PROCÉDÉ DE PRÉPARATION D'UNE PIÈCE MOULÉE EN POLYURÉTHANE

(30) Priorität: 17.03.2014 DE 102014204937
(43) Veröffentlichungstag der Anmeldung: 25.01.2017
(73) Patentinhaber: Fraunhofer-Gesellschaft zur Förderung der angewandten Forschung e.V., 80686 München (DE)
(72) Erfinder: VISSING, Klaus-Dieter, 27321 Thedinghausen (Morsum) (DE); BITOMSKY, Peter, 28279 Bremen (DE); HOLZ, Christian, 44137 Dortmund (DE)
(74) Vertreter: Eisenführ Speiser
(86) Internationale Anmeldenummer: PCT/EP2015/055520
(87) Internationale Veröffentlichungsnummer: WO 2015/140147

(56) Entgegenhaltungen:
- EP-A1- 0 238 685
- EP-B1- 0 894 152
- DE-A1-102005 059 706
- US-A- 4 764 330

## Beschreibung

Die Erfindung betrifft ein Verfahren zur Herstellung eines Polyurethanformteiles, umfassend die Schritte Bereitstellen einer Reaktionsmischung, die zu Polyurethan reagieren kann, Bereitstellen einer Form mit einer niedrigen Oberflächenenergie zur Formgebung des Polyurethanformteiles und Bereitstellen eines spezifischen Additiv für die Reaktionsmischung. Das Verfahren umfasst ferner die Schritte Mischen des Additiv mit der Reaktionsmischung und Aushärten dieser Mischung in der Form. Dabei gewährleistet das Additiv, dass eine gute Enthaftung möglich ist, ohne dass Trennmittel eingesetzt werden müssen.

Die Erfindung betrifft ferner die Verwendung eines entsprechenden Additiv zur Verbesserung der Enthaftung von einer Form, die über eine niedrige Oberflächenenergie verfügt sowie die Anordnung aus Formteil, das unter Zugabe des Additivs erzeugt wurde und einer Form.

Polyurethan (PUR) ist ein technischer Kunststoff, der in einer Vielzahl verschiedener Anwendungen eingesetzt werden kann. Das Produktspektrum erstreckt sich dabei von Weichschäumen über Hartschäume hin zu kompakten, thermoplastischen, elastomeren oder duroplastischen Bauteilen. Unterschiedliche Ausgangskomponenten auf der Basis von Polyolen, Isocyanaten und verschiedensten Additiven wie Katalysatoren, Aktivatoren, Füll- und Verstärkungsstoffe können nahezu beliebig miteinander kombiniert werden. Dadurch ergibt sich die Möglichkeit, die Materialeigenschaften gezielt auf die entsprechenden Anforderungen abzustimmen.

Formteile aus PUR werden hauptsächlich in diskontinuierlichen Formgebungsverfahren hergestellt, wobei die Ausgangskomponenten in Hoch- oder Niederdruckanlagen vermischt und zumeist in metallische Werkzeuge eingetragen werden. Da PUR-Bauteile, wie andere reaktive Kunststoffe, beim Ausreagieren eine hohe Haftung zu metallischen Oberflächen entwickeln, müssen die formgebenden Werkzeuge in der Regel mit Trennmitteln versehen werden. Diese gewährleisten eine einfache, zerstörungsfreie Entformung der Bauteile und ermöglichen eine hohe Oberflächengüte. Zusätzlich wird die Prozesssicherheit gesteigert, was einen störungsfreien Verfahrensablauf garantiert. Beim aktuellen Stand der Technik entstehen in Abhängigkeit vom verwendeten Trennmittel jedoch verschiedene Nachteile, die in den folgenden Unterkapiteln genauer vorgestellt werden. So kann die Entformung beispielsweise durch einen Trennmittelübertrag von der Werkzeugoberfläche auf das Bauteil begleitet sein, welcher zusätzliche Arbeitsschritte und Folgekosten durch zusätzliche Bauteilreinigungen verursacht. Zudem ist die Langzeitstabilität üblicher Trennmittelsysteme unbefriedigend. Dies führt zu häufigen Reinigungen und Wiederbeschichtungen der Formen.

Bei der Auswahl eines geeigneten Trennmittels müssen verschiedene Randbedingungen berücksichtigt werden. Die Art des verwendeten Trennmittels richtet sich dabei nach dem genutzten PUR-System, dem Werkzeugmaterial, wie Stahl, Aluminium, Nickel oder Kunstharz, der Werkzeugtemperatur oder der geforderten Oberflächenqualität. Grundsätzlich wird zwischen internen und externen Trennmitteln unterschieden.

### Interne Trennmittel

Interne Trennmittel werden den Ausgangskomponenten des PUR-Systems beigemischt, weshalb solche Polyurethane auch als IMR (Internal Mould Release)-Systeme bezeichnet werden. Die trennaktiven Substanzen bilden in der Grenzfläche zwischen PUR- und Werkzeugoberfläche eine dünne Schicht, welche die Haftungskräfte verringert, häufig in Kombination mit externen Trennmitteln. Sie ermöglichen kurze Zykluszeiten, da das häufige zusätzliche Eintrennen des Werkzeugs entfällt. Typischerweise werden grenzflächenaktive Moleküle, wie Fettsäureester oder aliphatische Salze von Carbonsäuren, eingesetzt. Die Auswahl geeigneter interner Trennmittel muss auf das genutzte PUR abgestimmt werden. Je nach verwendeter Substanz liegen die Trennmittel einerseits über dem gesamten Bauteilvolumen vor, wobei gleichzeitig die Materialeigenschaften beeinflusst werden können. Da sie jedoch nur in der Grenzfläche benötigt werden, werden andererseits auch migrierende Substanzen angeboten, die sich beim Füllvorgang in der Grenzfläche anreichern. Diese Systeme sind jedoch für nachfolgende Prozessschritte wie Lackieren oder Kleben ungeeignet, weil die trennaktiven Substanzen auch nach der Formteilbildung an die Oberfläche migrieren können und die Haftungskompatibilität zu Lacken oder Klebstoffen mindern. Interne Trennmittel im Sinne dieses Textes sind solche Trennmittel, die nicht bzw. nicht in relevanten Anteilen an das PUR-Gerüst gebunden werden und der PUR-Reaktionsmischung beigegeben werden. Sie sind grenzflächenaktiv und erleiden an der Bauteiloberfläche einen Kohäsionsbruch während des Trennvorganges.

Interne Trennmittel werden nahezu ausschließlich in Kombination mit externen Trennmitteln eingesetzt, um die notwendige Trennleistung zu erzielen. Zum einen kann so die Langzeitstabilität externer Trennmittel erhöht werden, so dass weniger externe Trennmittel benötigt werden. Zum anderen können so die Anteile an internen Trennmitteln reduziert werden, was sich positiv auf die Materialeigenschaften auswirkt.

### Externe Trennmittel

Externe Trennmittel werden nicht in das zu verarbeitende Material eingemischt, sondern auf die Oberfläche des im Werkzeug befindlichen Formnests aufgetragen. Je nach Häufigkeit des Eintrennprozesses wird zwischen nicht-permanenten und semipermanenten Trennmitteln unterschieden.

Unter dem Begriff nicht-permanente Trennmittel werden alle Systeme zusammengefasst, die nach wenigen Formgebungsvorgängen ihre Wirksamkeit verlieren. Deswegen müssen diese Trennmittel mit jedem Formgebungszyklus erneut auf die Kavitätsoberfläche des Werkzeugs aufgebracht werden. Semi-permanente Trennmittel erfordern dementsprechend weniger häufig eine Erneuerung.

Externe Trennmittel im Sinne dieses Textes zeichnen sich dadurch aus, dass sie eine kohäsive Trennung (im Trennmittel oder einer dünnen Mischungszone von Trennmittel und dem Polyurethan) verursachen und damit Rückstände undefiniert in Menge und Ort auf dem ausgeformten Bauteil zurück lassen. Externe Trennmittel werden weder der PUR-Reaktionsmischung beigegeben noch finden sie sich nach Aushärtung in tieferen Schichten des PUR-Formkörpers.

### Permanente Entformungsschichten

Permanente Entformungsschichten stellen einen alternativen Lösungsansatz zur Entformung von PUR-Bauteilen dar. Sie sollen bei einmaligem Auftrag auf das Werkzeug eine hohe Anzahl an Entformungen ermöglichen, wobei hohe Standzeiten von über 1000 Entformungen angestrebt werden. Beim gegebenen Stand der Technik gibt es mehrere Verfahren und Substanzen, mit denen permanente Entformungsschichten auf der Kavitätsoberfläche realisiert werden können.

Eine erste Möglichkeit stellt die Sol-Gel-Beschichtung dar. Zur Herstellung des Sol-Systems werden nanoskalige Partikel in einem flüssigen Trägermedium zu einer kolloidalen Suspension dispergiert. Die dispergierten Feststoffe werden auch als Precursor bezeichnet und bestehen meist aus anorganischen Materialien, wie beispielsweise Siliziumverbindungen. Sie sind stabilisiert, um eine Aggregation bzw. Agglomeration der Partikel zu unterdrücken und damit ein Ausfällen aus der flüssigen Phase zu vermeiden. Nach dem Auftrag auf die Werkzeugoberfläche bildet sich mit der Verflüchtigung des Trägermediums eine Gelschicht aus. Dabei wird durch Kondensationsreaktionen oder die Bildung von Wasserstoff- oder Sauerstoffbrückenbindungen ein räumliches Netzwerk der Precursormoleküle gebildet, das noch mit Lösungsmittel durchtränkt ist. Durch zusätzliches Erhitzen verflüchtigt sich das verbleibende Lösungsmittel bei gleichzeitiger, weiterer Vernetzung des Precursorgerüsts. Folglich bildet sich eine dünne, hochvernetzte, kompakte Schicht, die je nach Zusammensetzung eine einfache Entformung von PUR-Bauteilen ermöglichen soll. Anhand bisheriger Forschungsarbeiten an Weichschaumstoffen wird vermutet, dass auf diesem Gebiet nur dann befriedigende Lösungen für die PUR-Verarbeitung entwickelt werden können, sofern zusätzlich ein sogenanntes tribologisches Entformungshilfsmittel gefunden wird. Dieses Mittel soll die Losbrechkraft und die Reibung reduzieren. Die Suche konzentriert sich dabei derzeit auf externe Trennmittel. Zu den erfolgversprechenden Eigenschaften der Sol-Gel-Beschichtungen zählen geringe Oberflächenenergien sowie gute chemische und mechanische Beständigkeit.

Eine weitere Möglichkeit zur Erzeugung dauerhafter Trennschichten bietet das Plasmapolymerisationsverfahren. Dabei können verschiedene antiadhäsive Substanzen mit Hilfe von Plasmaprozessen auf die Werkzeugoberfläche aufgetragen werden. Das Grundprinzip der Plasmabeschichtung ist bei allen Verfahrensvarianten identisch. Dabei werden einem Plasma Precursormoleküle über ein Arbeitsgas zugeführt. Die Moleküle werden dort aufgebrochen, aktiviert und kondensieren an der Oberfläche des zu beschichtenden Werkzeugs. Dort bilden sie eine dreidimensional stark vernetzte Oberflächenschicht aus. Die molekulare Zusammensetzung der Beschichtung ist abhängig von den verwendeten Precursormolekülen und Plasmabedingungen. Das Beschichtungsverfahren wird entweder unter Atmosphärendruck (AD) oder einem Niederdruck (ND) von 0,01 bis 0,1 mbar durchgeführt.

Bei der AD-Plasmapolymerisation wird die Precursorflüssigkeit über ein Verdampfungsaggregat zu einer Plasmadüse geleitet. Während der Beschichtung wird die Düse z.B. mit Hilfe eines Roboterarms über das Werkzeug geführt. Da keine Niederdruckkammer benötigt wird, ergeben sich neben den geringeren Investitionskosten auch andere Vorteile. So kann beispielsweise die Größe des zu beschichtenden Werkzeugs beliebig ausgewählt werden. Im Gegensatz zum ND-Verfahren bietet sich auch die Möglichkeit die Plasmabeschichtung in-line in den Produktionsprozess zu integrieren. Die Beschichtung komplexer Geometrien ist mit diesem Verfahren jedoch nicht möglich. Verschiedene AD-Beschichtungen für die Entformung von PUR-Bauteilen werden bereits angeboten, wie zum Beispiel die Beschichtung "PlasmaPlus" der Plasmatreat GmbH, Steinhagen und der CeraCon GmbH, Weikersheim.

Bei der Verarbeitung im ND-Bereich erfolgt die Beschichtung von Substraten in einem abgeschlossenen Reaktor, der mit Precursorgas befüllt wird. So lassen sich bei der Verwendung von Precursorgasen aus Argon, Methan oder Azetylen beispielsweise diamantähnliche Oberflächenbeschichtungen (engl. diamond-like carbon, DLC) herstellen. Die DLC-Schichten bestehen aus räumlich stark vernetzten amorphen Kohlenstoffschichten, wobei die erzeugte Schichtdicke ca. 1 µm bis 10 µm beträgt. Die physikalischen Eigenschaften solcher Schichten lassen sich durch den Wasserstoffgehalt oder die Modifikation mit metallischen oder nichtmetallischen Elementen gezielt einstellen. Das Eigenschaftsspektrum erstreckt sich dabei von Polytetrafluorethylen (PTFE)-ähnlichen Schichten bis hin zu hochverschleißfesten, reibungsarmen Schichten, die im Vergleich zu PTFE-Beschichtungen eine fünfzigfach höhere Oberflächenhärte aufweisen. Zur Erzeugung einer besseren Antihaftwirkung können beispielsweise Silizium oder Sauerstoffmoleküle in die DLC-Schicht integriert werden. Eine solche Schicht wurde unter dem Handelsnamen SICON vom Fraunhofer-Institut für Schicht- und Oberflächentechnik (IST), Braunschweig, entwickelt.

Des Weiteren wurde vom Fraunhofer Institut für Fertigungstechnik und Angewandte Materialforschung (IFAM), Bremen zusammen mit der Acmos Chemie KG, Bremen, eine plasmapolymere Entformungsschicht für die Verarbeitung von PUR-Formmassen entwickelt. Für die vorliegende Beschichtung wird Hexamethyldisiloxan (HMDSO) in Kombination mit Sauerstoff als Precursor eingesetzt. Dies wird in der DE10034737 A1 beschrieben. Da weniger Energie in das Plasma eingetragen wird, als zum vollständigen Fragmentieren erforderlich ist und die Beschichtung bei einem Precursorüberschuss durchgeführt wird, bleiben die wesentlichen Elemente der Molekülstruktur (Methylgruppen (CH₃) und Si-O-Si-Brücken) erhalten. Deshalb wird in diesem Zusammenhang von einer strukturerhaltenden Plasmapolymerisation gesprochen. Durch einen Wechsel der Zusammensetzung der Precursorgase und eine Veränderung der Plasmaprozessparameter während des Beschichtungsprozesses lassen sich sogenannte Gradientenschichten herstellen, deren molekularer Aufbau sich über die Schichtdicke ändert. Dadurch lässt sich eine gute Trennwirkung bei gleichzeitig hoher Haftvermittlung zur Metalloberfläche in einer Beschichtung vereinen. Die Gradientenschicht ist dabei so aufgebaut, dass an der Substratoberfläche eine hochvernetzte Si-O-Si-Grundschicht vorliegt. Sie hat eine hohe mechanische Stabilität, ist verschleißfest und hat eine gute Haftung zum metallischen Untergrund. Im Bereich der Schichtoberfläche wird die Konzentration von Methylengruppen erhöht. Die dehäsiven Eigenschaften dieser CH₃-Moleküle und die geringe Oberflächenenergie der Schicht erzeugen hervorragende Trenneigenschaften und sind in der DE102006018491 A1 beschrieben.

Nachteilig an den aus dem Stand der Technik bekannten permanenten Entformungsschichten ist, dass die Entformungsleistung im Regelfall insbesondere für Polyurethane schon nach der ersten Entformung erheblich sinkt. Dies führt dazu, dass regelmäßig zusätzlich interne Trennmittel eingesetzt werden müssen, die die oben beschriebenen Nachteile hinsichtlich der Reinigungsbedürfnisse und Übertragung von Mitteln mit sich bringen.

### Interphase

Die Bedeutung der Interphase wird häufig beschrieben im Zusammenhang mit Adhäsionsfragen von Klebstoffen, sei es für natürliche Systeme wie Holz oder technische Systeme wie CFK-Materialien sowie Füllstoffe in Kunststoffen oder Klebstoffen.

Ein Erklärungsansatz für gute Haftung ist die Diffusionstheorie. Sie basiert auf der Annahme, dass es entlang der Grenzfläche zu einer gegenseitigen Diffusion (Interdiffusion) von Makromolekülen, Kettensegmenten oder Polymerketten kommt, welche eine relativ hohe Beweglichkeit und gegenseitige Löslichkeit besitzen. Diese Diffusion kann innerhalb eines Polymers (Autohäsion) oder zwischen zwei Polymeren (Heterohäsion) erfolgen. Das Polymere sollte oberhalb seiner Glasübergangstemperatur vorliegen und für eine hohe Molekülbeweglichkeit keine wesentlichen Vernetzungen aufweisen. Das Gebiet der gegenseitigen Diffusion wird als Grenzflächenschicht (Interphase) bezeichnet. Diese Interphase ist definiert als eine Region zwischen zwei in Kontakt befindlichen Phasen. Diese Region kann in der Zusammensetzung und/oder der Struktur und/oder den Eigenschaften variieren und sich in diesen Punkten von den beiden im Kontakt befindlichen Phasen unterscheiden. Im Gegensatz dazu wird der Bereich zwischen zwei in Kontakt befindlichen Phasen, bei denen es zu keiner gegenseitigen Diffusion kommt, als Grenzfläche oder "Interface" bezeichnet.

Kommt ein Werkstoff auf einem anderen zur Aushärtung, so wird der Aushärtevorgang durch die Gegenwart der Grenzfläche beeinflusst. Die Beweglichkeit der Moleküle wird eingeschränkt, anziehende oder abweisende Wechselwirkungen, z.B. durch polare und unpolare Gruppen, finden bereits im noch nicht ausgehärteten Zustand statt. Die chemische Struktur und die Moleküldynamik in der Interphase entwickeln sich schließlich als das Produkt eines komplexen Wechselspiels von verschiedenen, z. T. konkurrierenden physikalischen und chemischen Prozessen. Auf Aluminiumoberflächen bilden sich beispielsweise bei der Aushärtung von PU Systemen neben Urethangruppen vermehrt Harnstoffgruppen, was eine Phasenseparation in der Interphase zu Folge hat. Dies wird auf einen katalytischen Effekt des Metalls und seiner Fähigkeit Feuchtigkeit zu adsorbieren zurückgeführt. Auf diese Weise können sich Interphasen bilden, die sich in ihrer Zusammensetzung und ihren Eigenschaften von dem Bulkmaterial unterscheiden.

In der Adhäsionsforschung konnten bisher viele Aspekte von Haftung und Enthaftung in den Verbunden nicht schlüssig erklärt werden, da die Ursache für das Versagen häufig nicht direkt in der Grenzfläche zu suchen ist, sondern in der Interphase. Es hat sich gezeigt, dass gerade Polyurethane eine Interphase an der Grenze zu einer permanenten Trennschicht aufbauen. Diese Interphase ist durch die Zusammensetzung des PUR-Systems und durch die Aushärtebedingungen modifizierbar, so dass hierdurch ein direkter Zusammenhang mit den Entformungskräften und der Langzeitbeständigkeit einer guten Trennleistung entsteht. Die chemische Struktur dünner Filme bzw. der Interphase entsteht als Produkt eines komplexen Wechselspiels von Polyaddition und weiteren konkurrierenden Prozessen. Dabei sind insbesondere die Mechanismen, welche unmittelbar zwischen der Substratoberfläche und dem Polyurethan ablaufen, für ein Versagen des Trennmechanismus verantwortlich. Die Eigenschaften der Grenzfläche sowie der unmittelbar daran anschließenden PUR-Interphase sind entscheidend für die Adhäsion zwischen Substrat und Polymer.

Neben dem Kontakt zwischen dem ausreagierten PUR und der Oberfläche, von der zu trennen ist (Formoberfläche) nehmen auch die Wechselwirkungen zwischen den Edukten und der Oberfläche zu Beginn der Polymerbildung Einfluss auf die Hafteigenschaften. Die Haftung wird dabei nicht nur von den reinen Grenzflächenwechselwirkungen bestimmt. Vielmehr nehmen auch die ersten Schichten des Polymers Einfluss auf die Haftung. Während die Grenzfläche die direkte Kontaktfläche darstellt, ist die Interphase als das Gebiet gekennzeichnet, welches zu einem großen Teil von den Grenzflächeneffekten bestimmt wird und noch nicht die eigentlichen Eigenschaften des Materials im inneren des Bauteils (Bulk) besitzt. Die Dicke dieser Interphase mit lokal variierenden Eigenschaften kann von wenigen Nanometern bis hin zu vielen Mikrometern differenzieren.

### Verfahrenstechnik

Alle technischen Ansätze, um konsequent auf Trennmittel verzichten zu können, lassen sich grundsätzlich in zwei Kategorien unterteilen:
1. Die Einlegertechnologie, bei der Folien oder spritzgegossene Einsätze in die Form gelegt werden, welche einerseits einen direkten Kontakt des Materials mit der Formoberfläche verhindern und andererseits selbst gute Trenneigenschaften aufweisen.
2. Die direkte, haftfeste Beschichtung der Form mit einer Trennschicht.

### Einleger-Technologie:

- Foam and Film Technologie von Canon S.p.A. Peschiera Borromeo, Italien
- PURe-Liner von Frimo Group GmbH, Lotte (siehe auch DE 10 2009 054 893 A1)
- Folieneinleger aus Fluorpolymeren (z.B. ETFE)

### Formenbeschichtungstechnologien:

- Fluorpolymerbeschichtungen (wie Polytetrafluorethylen PTFE)
- Plasmapolymere Beschichtungen
   beschichtet mit Niederdruck-Plasmatechnik (z.B. EP 0 841 140 A2, DE 10 034 737 A1, DE 100 34 737 A1 oder DE 10 2006 018 491 A1) oder Atmosphärendruck-Plasmatechnik, z.B. DE 10 2005 059 706 A1

- Sicon (Fraunhofer IST) DLC-Beschichtungen
- PlascoSAM (JE Plasma Consult GmbH) DLC-Beschichtungen

Zu siliciumorganischen plasmapolymeren Beschichtungen gibt es zudem eine Vielzahl weiterer Offenlegungen. Beispielsweise
- DE 101 31 156 A1,
- DE 10 2009 002 780 A1,
- DE 10 2007 000 611 A1.

In EP 0 841 140 A2 werden nur allgemeine Hinweise zur Herstellung von plasmapolymeren Trennschichten gegeben ohne eine nähere Beschreibung der zu verwendenden Schichten. Es werden lediglich beispielhafte Angaben zum Wasser-Kontaktwinkel und zur Gesamt-Oberflächenenergie gemacht. Zudem gibt es keinen Hinweis darauf, wie die für einen 21 L Plasmareaktor beschriebene Beschichtungsprozedur verändert werden muss, um Kunststoffformen zu beschichten, die eine wesentlich größere Ausdehnung als die beschriebenen 1,3 x 1,2 x 22 cm haben.

In DE 10 034 737 A1 wird ein Verfahren zur Herstellung einer permanenten Entformungsschicht durch Plasmapolymerisation auf der Oberfläche eines Formteilwerkzeugs offenbart, bei dem durch zeitliche Variation der Polymerisationsbedingungen ein Gradientenschichtenaufbau in der Entformungsschicht erzeugt wird. Eine genaue Beschreibung der Zusammensetzung oder des Aufbaus der plasmapolymeren Trennschicht wird nicht gegeben. Allerdings werden beispielhafte Ausführungsvorschriften für das Beschichten von Kunststoffformen in einem 355 L Plasmareaktor gegeben. Zudem wird erwähnt, dass sich durch eine geeignete Wahl und zeitliche Variation der Parameter erreichen lässt, dass, z. B. für den Fall der Polymerisation siliciumorganischer Verbindungen, das anorganische Netzwerk (glasähnlich) direkt auf der Formoberfläche und das organische Netzwerk auf dem anorganischen Netzwerk kontinuierlich aufgebracht wird. Dadurch werden eine optimale Haftung zum Untergrund und eine optimale Permanenttrennwirkung zum Formteil hin (z. B. durch einen hohen Anteil CH₃-und/oder CF₃-Gruppen in der Oberfläche) erreicht.

DE 10 2005 059 706 A1 beschreibt ein Verfahren zum Herstellen einer plasmapolymeren Trennschicht auf einer Substratoberfläche, wobei ein Plasmapolymer auf der Substratoberfläche bei Atmosphärendruck unter zeitlich konstanten Polymerisationsbedingungen gebildet wird. Zur Trennschicht werden Angaben über die chemische Zusammensetzung gemäß XPS-Analyse gegeben, Angaben zu makroskopische Eigenschaften, wie der Härte bzw. dem E-Modul, fehlen jedoch.

In der DE 10 2006 018 491 A1 bzw. WO 2007/118905 A1 wird ein Artikel umfassend oder bestehend aus einem plasmapolymeren Produkt, bestehend aus Kohlenstoff, Silicium, Sauerstoff und Wasserstoff sowie gegebenenfalls üblichen Verunreinigungen, wobei im ESCA-Spektrum des plasmapolymeren Produktes, bei Kalibrierung auf den aliphatischen Anteil des C 1s Peaks bei 285,00 eV, im Vergleich mit einem trimethylsiloxy-terminierten Polydimethylsiloxan (PDMS) mit einer kinematischen Viskosität von 350 mm²/s bei 25 °C und einer Dichte von 0,97 g/mL bei 25 °C, der Si 2p Peak einen Bindungsenergiewert besitzt, der um maximal 0,44 eV zu höheren oder niedrigeren Bindungsenergien verschoben ist, und der O 1s Peak einen Bindungsenergiewert besitzt, der um maximal 0,50 eV zu höheren oder niedrigeren Bindungsenergien verschoben ist, offenbart.

Erwähnt wird, dass wegen der Dehnfähigkeit dieser plasmapolymeren Beschichtung flexible Produkte, wie Folien (insbesondere dehnbare Folien) mit einer entsprechenden Antihaft- bzw. Easy-to-Clean-Oberfläche versehen werden können. Zudem wird erwähnt, dass diese plasmapolymere Beschichtung als Trennschicht oder Teil einer Trennschicht auf einer Formoberfläche verwendet werden kann.

Bei dieser plasmapolymeren Beschichtung handelt es sich um eine weiche, Beschichtung mit elastomerähnlichen mechanischen Eigenschaften.

DE 101 31 156 A1 beschriebt einen Artikel, umfassend ein Substrat und eine flächig mit dem Substrat verbundene plasmapolymere, Sauerstoff, Kohlenstoff und Silizium umfassende Beschichtung, wobei für die Stoffmengenverhältnisse in der plasmapolymeren Beschichtung auf der von dem Substrat abgewandten Seite gilt:
1,1 : 1 < n (O) : n (Si) < 2,6 : 1
0,6 : 1 < n (C) : n (Si) < 2,2 : 1;
wobei vorzugsweise
1,4 : 1 < n (O) : n (Si) < 1,9 : 1
1,2 : 1 < n (C) : n (Si) < 1,7: 1 gilt.

Hier wird allerdings kein Hinweis auf eine Nutzung dieser Beschichtungen als Trennschichten zur Entformung von Kunststoffbauteilen gegeben. Ebenso werden keine Angaben zu makroskopische Eigenschaften, wie der Härte bzw. dem E-Modul, gemacht.

In der DE 10 2007 000 611 A1 **und** DE 10 2009 002 780 A1 werden Verfahren zum Beschichten der Oberfläche eines (Leicht)Metallsubstrates, mit folgenden Schritten beschrieben:
A. Bereitstellen des Leichtmetallsubstrates und gegebenenfalls Säubern der zu beschichtenden Substratoberfläche,
B. Beschichten der gegebenenfalls in Schritt A gesäuberten Substratoberfläche in einem Plasmapolymerisationsreaktor mittels Plasmapolymerisation, wobei
   - in Schritt B als Precursor(en) für das Plasma eine oder mehrere siliciumorganische sowie (a) keine weiteren oder (b) weitere Verbindungen eingesetzt werden und
   - in Schritt B das Leichtmetallsubstrat im Plasmapolymerisationsreaktor so angeordnet wird, dass es (i) sich zwischen der Zone, in der das Plasma gebildet wird, und der Kathode befindet oder (ii) als Kathode wirkt,
      dadurch gekennzeichnet, dass das Verfahren so geführt wird, dass die durch das Verfahren hergestellte Beschichtung
   - einen durch Messung mittels XPS bestimmbaren Anteil von Kohlenstoff von 5 bis 20 Atom-%, vorzugsweise 10 bis 15 Atom-%, bezogen auf die Gesamtzahl der in der Beschichtung enthaltenen Kohlenstoff-, Silicium- und Sauerstoffatome,
   - einen nach ASTM D 1925 bestimmten Gelbindex (Yellow Index) von ≤ 3, vorzugsweise ≤ 2,5 und
   - eine mittels Nanoindentation zu messende Härte im Bereich von 2,5 bis 6 GPa, vorzugsweise 3,1 bis 6 GPa
aufweist.

DE 10 2005 014 617 A1 beschreibt ein Formwerkzeug zum Gießen von Linsen aus Kunststoff, mit einem von Oberflächen begrenzten Hohlraum und mit Mitteln zum Einbringen des Kunststoffes in den Hohlraum, wobei die Oberflächen mit einer Beschichtung versehen sind, dadurch gekennzeichnet, dass die Beschichtung eine elektrische Leitfähigkeit von weniger als 1 Ωcm aufweist. Als ein Beispiel für die Beschichtungen werden ternäre Verbindungen mit C, Si, O erwähnt. Einen Hinweis auf Beschichtungen mit wasserstoffhaltigen organischen Gruppen gibt es nicht.

US 2010/239783 A1 beschreibt ein Verfahren zum Herstellen einer Arbeitsform, umfassend das Platzieren eines Substrats in der Nähe einer Elektrode in einer Kammer, wobei das Substrat mindestens eine erste strukturierte Fläche hat, die Elektrode mit Strom versorgt wird, um ein Plasma zu erzeugen, der von Dampf von flüssigen Silikonmolekülen nach der Formel R₃Si-O-(SiR₂-O)ₙ-SiR₃ in das Plasma eingeleitet wird, wobei jedes R unabhängig voneinander H, OH, Alkyl, Aryl oder Alkoxy ist; und n eine ganze Zahl von 3 bis 3000 ist, und das Abscheiden einer Trennschicht, wobei die Trennschicht ein silikonhaltiges Polymer umfasst, wobei die Trennschicht auf zumindest einem Teil der ersten strukturierten Fläche des Substrats abgeschieden ist, um die Arbeitsform zu bilden. Die dort beschriebenen Schichten werden aufgrund der verwendeten Moleküle und der beschriebenen Vorgehensweise eine Nanohärte < 0,15 GPa, und einen E-Modul, gemessen mit einem Nanoindenter, < 1,5 GPa aufweisen.

Wünschenswert wäre es, durch den Einsatz permanenter Entformungsschichten auf nicht-permanente Trennmittel (externe und interne, s.o.) verzichten zu können und gravierende wirtschaftliche und ökologische Problemstellungen zu umgehen. Dabei gibt es verschiedene permanente Entformungsschichten auf dem Markt, die sich hinsichtlich ihrer chemischen Struktur und dem Beschichtungsverfahren unterscheiden. Diese Schichten müssen im Unterschied zu den nicht-permanenten Trennmitteln deutlich höhere Anforderungen erfüllen. Sie müssen nicht nur eine zerstörungsfreie Entformung des Bauteils mit geringem Kraftaufwand ermöglichen, sondern darüber hinaus auch lange Standzeiten gewährleisten. Auf die Notwendigkeit der regelmäßigen Neubeschichtung soll dabei verzichtet werden. Dieses Ziel kann nur erreicht werden, wenn der reine Adhäsionsbruch in der Trennebene als alleiniger Trennmechanismus eingestellt werden kann.

Beim aktuellen Stand der Technik wird in der Regel bei der Verwendung permanenter Trennschichten in der PUR-Verarbeitung ein Mischbruch aus Kohäsions- und Adhäsionsbruch in der Interphase des PUR's erzeugt. Dies bedingt nicht nur größere Entformungskräfte, sondern führt auch dazu, dass sich mit zunehmender Zahl der Entformungen makroskopische Ablagerungen auf der Trennschicht aufbauen, die in regelmäßigen Abständen entfernt werden müssen. Zur Zeit ist es daher kaum möglich, das Potenzial der permanenten Trennschichten sinnvoll zu nutzen, da das Trennvermögen häufig schon nach wenigen Entformungsvorgängen stark nachlässt oder die geforderten Standzeiten von mehreren tausend Entformungsvorgängen nicht eingehalten werden können. Die regelmäßige Reinigung und das wiederholte Neubeschichten machen den Einsatz von permanenten Entformungsschichten aufgrund der damit verbundenen Produktionsunterbrechungen für die Serienfertigung bis auf wenige Ausnahmen unwirtschaftlich.

Vor diesem Hintergrund war es Aufgabe der vorliegenden Erfindung, ein Verfahren zur Herstellung eines Polyurethanformteiles anzugeben, mit dem eine verbesserte Trennbarkeit des Formteils von der Form gewährleistet ist. Bevorzugt sollte dabei auf den Einsatz interner und externer Trennmittel verzichtet werden können. Außerdem war es wünschenswert, zu gewährleisten, dass die Form langfristig, d. h. insbesondere über viele Trennzyklen eine gute Trennwirkung behält und nicht verschmutzt.

Diese Aufgabe wird gelöst durch ein Verfahren zur Herstellung eines Polyurethanformteils, umfassend die Schritte:
a) Bereitstellen einer Reaktionsmischung, die zu Polyurethan reagieren kann,
b) Bereitstellen einer Form zur Formgebung des Polyurethanformteiles, wobei die Form im Bereich der für die Formgebung vorgesehenen Fläche über eine Oberflächenenergie von ≤ 24,8 mN/m und/oder über einen polaren Anteil der Oberflächenenergie von ≤ 2,0 mN/m, bevorzugt ≤ 1,5 mN/m, weiter bevorzugt ≤ 1,0 mN/m verfügt,
c) Bereitstellen eines Additivs der allgemeinen Formel (I), (II), (III) oder (IV) mit 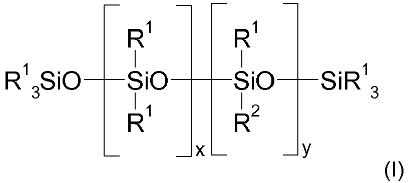 wobei
   jeder R¹ unabhängig von den anderen einen Alkylrest mit 1 bis 18 bevorzugt 1 bis 6 Kohlenstoffatomen oder einen Arylrest, wobei der Arylrest bevorzugt ein Phenylrest ist, bedeutet,
   R² einen der Reste oder 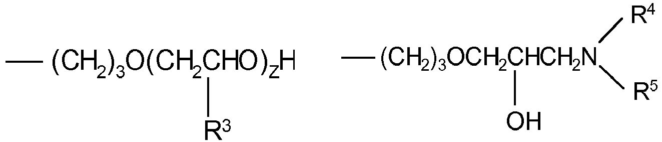
   bedeutet,
   jeder R³ unabhängig von den anderen Wasserstoff oder einen Alkylrest, wobei der Alkylrest bevorzugt ein Methylrest ist, bedeutet,
   jeder R⁴ und jeder R⁵ unabhängig voneinander und von den anderen jeweils einen Kohlenwasserstoffrest bevorzugt mit 1 bis 18 C-Atomen oder ein heterocyclisches Ringsystem mit mindestens einem Stickstoffatom und bevorzugt 3 bis 17 C-Atomen bedeuten,
   x eine Zahl von 5 bis 90, vorzugsweise 10 bis 45 darstellt,
   y eine Zahl von 1 bis 5, vorzugsweise 1 bis 3 darstellt und
   z eine Zahl von 1 bis 25, vorzugsweise 3 bis 9 darstellt
   oder 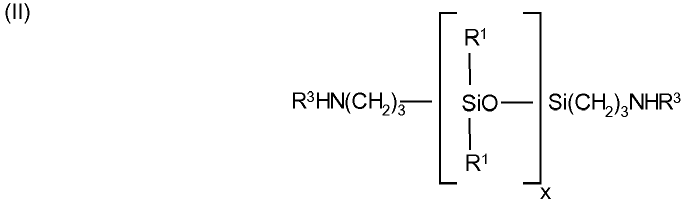
   wobei R¹ und R³ die oben beschriebene Bedeutung haben und
   x eine Zahl von 10 bis 65, vorzugsweise 10 bis 45 darstellt
   oder 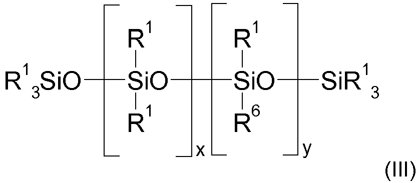
   wobei R¹ und y die oben beschriebene Bedeutung haben,
   jeder R⁶ unabhängig von den anderen einen Rest

   -(CH₂)₃NHR⁷

   darstellt,
   jeder R⁷ unabhängig von den anderen H oder einen Rest

   -(CH₂)₂NH₂

   darstellt und
   x eine Zahl von 5 bis 90, vorzugsweise 10 bis 65 darstellt,
   oder

   (IV) HO(CH₂CH₂O)ₙCH₂CF₂O(CF₂CF₂O)ₚ(CF₂O)_{q}CF₂CH₂(OCH₂CH₂)ₙOH

   wobei
   n eine Zahl von 1 bis 20, vorzugweise 2 bis 9 darstellt und
   p und q unabhängig voneinander Zahlen von 1 bis 20, vorzugsweise 1 bis 10 darstellen.
d) Mischen des Additivs mit der Reaktionsmischung und
e) Aushärten der in Schritt d) erzeugten Mischung in der Form.

Ein Additiv im Sinne des vorliegenden Textes ist dabei eine Verbindung, die in das Polyurethangerüst eingebaut werden kann. Dabei liegt im Sinne der vorliegenden Erfindung ein Additiv dann vor, wenn ≥ 85 Gew.-%, bevorzugt ≥ 90 Gew.-%, weiter bevorzugt ≥ 95 Gew.-% und besonders bevorzugt ≥ 99 Gew.-% der entsprechenden Verbindung an das Polyurethangerüst kovalent angebunden werden. Ferner ist das Additiv eine oberflächenaktive Substanz, welche bevorzugt über eine so niedrige Oberflächenenergie verfügt, so dass eine vollständige Benetzung der für die Formgebung vorgesehenen Fläche der Form möglich wird.

Im Sinne des vorliegenden Textes ist die für die Formgebung vorgesehene Fläche der Form (i) fester Bestandteil der Form selbst (d. h. aus dem gleichen Grundmaterial wie der Hauptbestandteil der Form), (ii) liegt als an die Form angepasste Zwischenschicht ohne kohäsive Bindung an die Form selbst ("Einleger") oder (iii) bevorzugt in Form einer kohäsiv an die Form gebundenen fest vernetzten Beschichtung vor. Diese Beschichtung wird als permanente Trennbeschichtung bezeichnet und weist in in einem Abzugstest eine Mindesthaftkraft von 1 N/mm² zur Form auf. Die Haftkraft wird dabei nach folgender Methode gemessen: Stempelabzugtest entsprechend Abschlussbericht des AiF-Projektes (Vorhaben 296 ZN) "Permanente Plasmapolymere Trennschichten als Trennmittelersatz für Werkzeuge der PUR-Verarbeitung" oder "Entwicklung einer plasmapolymeren Entformungsschicht für die PU-Verarbeitung" (PU Magazin 11 (2011) 6, S. 296-305). Bevorzugt zeichnet sich eine (permanente) Trennschicht im Sinne des vorliegenden Textes dadurch aus, dass es im Falle eines Abzugstestes nicht zu einem Kohäsionsbruch innerhalb dieser Trennschicht kommt, wie es z.B. bei PTFE-ähnlichen Schichten zu erwarten ist. Im Sinne dieses Textes sind die für die Formgebung vorgesehenen Flächen auf der der Form abgewandten Seite mit einer Oberflächenenergie von ≤ 24,8 mN/m und/oder einem polaren Anteil der Oberflächenenergie von ≤ 2,0 mN versehen.

Die Oberflächenenergie bzw. der polare Anteil der Oberflächenenergie wird dabei im Sinne dieses Textes nach folgendem Verfahren gemessen: Die Oberflächenenergie wird gemäß der DIN 55660-2 vom Dez. 2011 mit einem Kontaktwinkelmessgerät G2 der Fa. Krüss bestimmt. Dabei werden als Prüfflüssigkeiten Wasser, Dijodmethan und Ethylenglykol mit hohem Reinheitsgrad verwendet. Die Prüfflüssigkeiten weisen folgende Kenndaten auf:

| | |
|---|---|
| Wasser | Oberflächenenergie: 72,8 mN/m, polarer Anteil: 51,0 mN/m |
| Dijodmethan | Oberflächenenergie: 50,8 mN/m, polarer Anteil: 0,0 mN/m |
| Ethylenglykol | Oberflächenenergie: 47,7 mN/m, polarer Anteil: 16,8 mN/m |

Das verwendete Messverfahren ist die dynamische Messung (fortschreitender Kontaktwinkel), bei der während der Flüssigkeitszufuhr der Randwinkel bestimmt wird. Die Einstellung der Basislinie erfolgt im Zweifelsfall händisch, horizontal in der Mitte zwischen der Spritzenspitze und dem Spiegelbild. Der Nadelabstand wird auf ca. 2 mm eingestellt. Vor der Messung wird die Oberfläche ggf. mit Aceton gesäubert (einmalige ganz leichtes Abwischen mit Aceton und einem fuselfreien Tuch), um die Gefahr von Fehlmessungen zu reduzieren.

Als Prüfflüssigkeitsmenge werden 6 µl mit einer Dosierrate von 11,76 µl/min verwendet. Die eigentliche Messung beginnt nach 5 s, dies entspricht einem Vorschubvolumen von ca. 1 µl. Es werden pro Flüssigkeit 3 Tropfen aufgesetzt. Die jeweiligen Ergebnisse werden gemittelt.

Die Auswertung der Kontaktwinkel sowie der Oberflächenenergie und des polaren Anteils der Oberflächenenergie erfolgte über die Software Drop Shape Analysis (DSA) for Windows (Version 1.91.0.2) der Firma Krüss. Dabei wurde für die Bestimmung des Kontaktwinkels das Polynomverfahren 2 verwendet. Die Auswertung für Oberflächenenergien wurde nach Wu [S. Wu, Calculation of interfacial tension in polymer systems, Journal of Polymer Science, Part C: Polymer Symposia (1971), Vol. 34, Issue 1, 19-30] vorgenommen. Die Auswertung erfolgte ohne Fehlergewichtung.

Permanente Trennschichten im Sinne dieses Textes unterscheiden sich von externen Trennmitteln primär dadurch, dass sie selbst bei der Trennung vom Bauteil nicht kohäsiv versagen und somit beim Trennvorgang nicht (teilweise) auf das Bauteil übertragen werden, und dadurch, dass sie weder mit einem internen Trennmittel, noch mit dem erfindungsgemäß einzusetzenden Additiv, noch mit den Bestandteilen des Polyurethans eine Mischung eingehen und so nicht direkt an der Bildung einer Interphase beteiligt sind. Permanent im Sinne der langanhaltenden Trennfähigkeit wird eine permanente Trennschicht überraschenderweise erst im Zusammenwirken mit dem erfindungsgemäßen Additiv.

Eigene Untersuchungen haben gezeigt, dass auch eine plasmapolymere Gradientenschicht für die meisten PUR-Systeme nur ein unzureichendes Entformungsverhalten aufweist.
- In diesen Untersuchungen wurde gezeigt, dass sich die chemische Zusammensetzung der Phasengrenzschicht des PUR-Bauteils vom Bauteilinneren unterscheidet. In dieser Interphase lassen sich Entmischungen und Migrationen nachweisen. Sie führen z.B. zu Anreicherungen von Sn-haltigem Katalysator und N-haltigen Stoffen auf der Bauteiloberfläche. Dies begründet die Annahme, dass die beschichtete Oberfläche des Werkzeugs (die Form) die Stöchiometrie des ausreagierenden PUR-Systems in den grenznahen Schichten deutlich beeinflusst. Durch die nanoskaligen Entmischungen in der Interphase wird ein vollständiges Ausreagieren des Polyurethans verzögert. Die Entmischungen werden nicht oder nur schwach in das Polymernetzwerk eingebunden und können sich somit nach Trennung auf der Werkzeugoberfläche anlagern. Dies führt letztendlich zu einem frühzeitigen Versagen der trennmittelfreien Fertigung mittels permanenter Trennschichten.
- Bereits bei der ersten Entformung des PUR-Bauteils wird ein Versagen des Trennmechanismus induziert, was sich durch einen sprunghaften Anstieg der Haftungskraft für folgende Entformungsvorgänge nachweisen lässt.
- Mit Hilfe der Rasterkraftmikroskopie (engl. Atomic Force Microscope, AFM) können nach wenigen Entformungsvorgängen nanoskalige, tröpfchenförmige Kontaminationen auf der Beschichtung nachgewiesen werden, die für das Versagen der Trennschicht verantwortlich gemacht werden.
- Röntgenspektroskopische Untersuchungen (engl. X-Ray Photoelectron Spectroscopy, XPS) haben gezeigt, dass sich sowohl stickstoffhaltige (N) als auch zinnhaltige Kontaminationen (Sn) auf der Beschichtung nachweisen lassen. Der gefundene Stickstoff stammt wahrscheinlich aus isocyanathaltigen Ablagerungen, das Zinn deutet auf Katalysatorrückstände hin.
- Eine Abnutzung der plasmapolymeren Entformungsschicht kann als Versagensmechanismus der Trennwirkung ausgeschlossen werden.

Basierend auf diesen Erkenntnissen wurden zusätzliche Voruntersuchungen durchgeführt, die sich mit der Kontamination verschiedener Kavitätsoberflächen befassen. Dabei wurde die Trennwirkung unterschiedlicher Werkzeugstähle und Beschichtungen in Abhängigkeit von der Verwendung aromatischer und aliphatischer PUR-Systeme getestet. Mit Hilfe der Untersuchungen wurde eine Anreicherung von Isocyanat auf der Bauteiloberfläche nachgewiesen. In Abhängigkeit vom verwendeten PUR-System wurden unmittelbar nach der Entformung unterschiedlich hohe NCO-Umsätze auf der Bauteiloberfläche gemessen. Die Betrachtung des NCO-Umsatzes über der Anzahl der Entformungen zeigt, dass mit den ersten Entformungen der NCO-Umsatz auf der Oberfläche sinkt und sich dort zunehmend mehr Isocyanat anreichert. Parallel wird ein Anstieg der benötigten Entformungskraft registriert. Somit lässt sich ein unmittelbarer Zusammenhang zwischen dem NCO-Umsatz an der Bauteiloberfläche und der Trennwirkung der Werkzeugoberfläche nachweisen.
Überraschenderweise hat sich herausgestellt, dass das erfindungsgemäß einzusetzende Additiv der allgemeinen Formel I, II, III oder IV in der Lage ist, die von den Erfindern festgestellten Probleme hinsichtlich der Interphase deutlich zu mindern oder sogar vollständig zu überwinden. Die EP 0238685 A1 offenbart, zwar, dass ähnliche oder gleiche Additive in der Herstellung von Polyurethanformteilen eingesetzt werden können. Dieses Dokument erkennt aber nicht den positiven Effekt dieser Additive auf die Interphase. Dementsprechend gibt es auch keinen Hinweis auf einen vorteilhaften Einsatz dieser Additive in Kombination mit niederenergetischen Formoberflächen. Stattdessen führt das in der EP 0238685 A1 offenbarte Verfahren sogar von der vorliegenden Erfindung weg, da hier stets auf den (zusätzlichen) Einsatz von Trennmitteln verwiesen wird.
Bevorzugt ist, dass der Mengenanteil des erfindungsgemäß einzusetzenden Additivs bezogen auf das Gesamtgewicht der Ausgangsstoffe 0,1 bis 5 Gewichtsprozent, bevorzugt 0,1 bis 3 Gewichtsprozent, weiter bevorzugt 0,2 bis 1 Gewichtsprozent beträgt.
Mit diesen Anteilen lassen sich die durch die Erfindung zu erzielenden Effekte besonders gut erreichen.
Bevorzugt ist ein erfindungsgemäßes Verfahren, wobei das Additiv eine Molmassenverteilung (Zahlenmittel) von 150 bis 15.000 Dalton, bevorzugt 200 bis 12.000 Dalton besitzt, wobei weiter bevorzugt ist, dass für das Additiv das Zahlenmittel der Molmasse 2.000 - 5.000 Dalton ist.
Des Weiteren ist bevorzugt, dafür das Additiv die OH-Zahl, 30 - 60 KOH/g, bevorzugt 40 - 50 KOH/g ist.
Vorteilhaft an den erfindungsgemäß einzusetzenden Additiven ist - wie bereits oben angedeutet -, dass sie permanent an das Polymergerüst angebunden werden. Somit sind keine wesentlichen Probleme aufgrund ungebundenen Additiv zu erwarten. Überraschenderweise hat sich herausgestellt, dass das einzusetzende Additiv, insbesondere in seinen bevorzugten Ausgestaltungsformen, in Kombination mit den entsprechenden Formoberflächen eine dauerhafte Trennleistung über eine Vielzahl von Trennzyklen gewährleistet. Zwar hatte sich herausgestellt, dass unter bestimmten Umständen (u. a. abhängig vom Reaktionsverfahren und der Reaktionsmischung) geringe Additivreste auch nach dem Entformen auf der Formoberfläche gefunden werden können. Überraschenderweise aber hat sich gezeigt, dass es weder zu keiner dauerhaften Anreicherung dieser Additivreste über eine Vielzahl von Zyklen, noch zu einer Anreicherung von Isocyanaten kommt. Damit kann die hohe Trennleistung über eine lange Zeit und eine Vielzahl von Zyklen aufrechterhalten werden.

Da die Polyurethanreaktionsmischungen zueinander sehr unterschiedlich sein können, wird der Fachmann das erfindungsgemäß einzusetzende Additiv in seiner konkreten Ausgestaltungsform an die jeweilige Mischung anpassen. Hier wird er dabei insbesondere darauf achten, dass das erfindungsgemäß einzusetzenden Additiv vor der Härtung mit den übrigen Polymerrohstoffen (wenigstens einer Komponente) verträglich ist, sodass entweder keine Entmischung in der flüssigen Phase stattfindet oder das Additiv allenfalls hoch dispers verteilt vorliegt.

Ferner wird der Fachmann darauf achten, dass sich abhängig von der Verfahrensführung bei der Aushärtung des Polymers und abhängig von den Polymergrundstoffen im Zuge der reaktiven Härtung eine Unverträglichkeit (eine verringerte Mischbarkeit) des Additiv einstellt, sodass eine Phasentrennung und eine Anreicherung des Additivs in der Phasengrenzschicht erfolgt.

Dabei wird der Fachmann die Verfahrensführung so wählen, dass dem erfindungsgemäß einzusetzenden Additiv eine ausreichende Zeit zur Entmischung und somit zur Anreicherung in der Bauteiloberfläche ermöglicht wird. Ohne auf eine Theorie festgelegt zu werden, vermuten die Erfinder, dass dadurch die Anreicherung von Harnstoffen und Urethaneinheiten in der Interphase vermieden oder wenigsten verringert wird.

Der Fachmann wird ferner darauf achten, dass die Oberflächenenergie des Additivs eine vollflächige Benetzung der (niederenergetischen) Formoberfläche gewährleistet. Die Oberflächenenergie des Additivs kann dabei mittels der Ringmethode nach De Noüy bestimmt werden. Auch dies trägt dazu bei, dass auf der Formoberfläche möglicherweise haftender Harnstoff und/oder Urethaneinheiten verdrängt werden.

Ferner wird der Fachmann das Polymerisationsverfahren so steuern, dass die polaren Strukturbestandteile des Additivs in den Polymergrundstoff hineinwirken und der Einbau ins polymere Netzwerk über geeignete funktionelle Gruppen, wie z. B. die Hydroxygruppen, insbesondere primäre Hydroxygruppen, oder Aminogruppen, erfolgt.

Sofern das erfindungsgemäß einzusetzende Additiv Aminogruppen umfasst, kann deren katalytischer Charakter genutzt werden, um den reaktiven Umsatz der Polyurethangrundstoffe im Bereich der Phasengrenzschicht zu beschleunigen. Auch dies kann eine verbesserte Oberflächenstruktur des PUR-Formteiles bewirken und so die Trennfähigkeit verbessern.

Ferner wird der Fachmann die Verfahrensführung so wählen, dass die erfindungsgemäß einzusetzenden Additive in einer ausreichenden Menge in das Polyurethangrundgerüst insbesondere im Bereich der Interphase (aber auch im Bulk) eingebaut werden (Copolymerisation), sodass ein Übertrag auf die Form und deren ggf. vorhandenen Verunreinigung unterbunden wird. Wie bereits zuvor angedeutet, wird der Fachmann die für die Formgebung vorgesehene Fläche der Form so gestalten, dass sie über eine ausreichend geringe Oberflächenenergie verfügt, sodass eine vollflächige Benetzung mit dem Additiv möglich ist. Auch wird der Fachmann im Zweifelsfall die Wahl der Oberflächenausgestaltung an die tatsächlich einzusetzende Reaktionsmischung und das daraus entstehende Bauteil anpassen, z.B. durch die Verwendung einer permanenten Trennschicht mit einem ausreichend geringen polaren Anteil der Oberflächenenergie.

Für das erfindungsgemäße Verfahren ist es bevorzugt, dass kein Trennmittel (externes oder internes Trennmittel) eingesetzt wird. So wird vermieden, dass eine Konkurrenz innerhalb der Interphase und letztendlich auch an der Grenzfläche (Interphase) zwischen den Trennmitteln und dem erfindungsgemäß einzusetzenden Additiv entsteht.

Anders als bei dem Einsatz von Trennmitteln (externe und interne Trennmittel, insbesondere im Sinne der oben beschriebenen Definition) wird durch den festen Einbau der Additive in die polymere Matrix nicht nur erreicht, dass durch den Trennvorgang immer wieder eine frische und ausreichend saubere Trennschichtoberfläche bereit gestellt wird, sondern auch, dass keine Umfeldverschmutzung verursacht wird und das hergestellte Bauteil auch nicht zur Annahme von Staub neigt.

Bevorzugt ist ein erfindungsgemäßes Verfahren, wobei die Form im Bereich der für die Formgebung vorgesehenen Fläche eine zu einem Festkörper vernetzte permanente Trennschicht besitzt.

Durch eine permanente Trennschicht (im Sinne der oben beschriebenen Definitionen) ist es möglich, den Formkörper aus einem beliebigen Material herzustellen.

Bevorzugt ist in dem Zusammenhang, dass die permanente Trennschicht eine plasmapolymere Schicht ist.

In diesem Zusammenhang ist ein Vorteil des im erfindungsgemäßen Verfahren einzusetzenden Additivs, dass sich die Auswahl möglicher Trennschichten deutlich erhöht. Dadurch, dass die Oberflächenenergie von Additiv und Trennschicht aufeinander abgestimmt werden können, ist es nun auch möglich, deutlich härtere Trennschichten, wie sie z. B. für die CFK-Verarbeitung eingesetzt werden, zu verwenden.

Bevorzugt ist im erfindungsgemäßen Verfahren, dass die permanente Trennschicht aus C, O, N, Si und/oder H besteht.

Dabei sind insbesondere solche plasmapolymeren Trennschichten bevorzugt, die aus siliziumorganischen Precursoren insbesondere aus PDMS hergestellt werden oder unter Verwendung dieser Precursoren abgeschieden werden. Dabei ist ein weiterer Vorteil, dass die erfindungsgemäß einzusetzenden Plasmapolymerschichten strukturverwandt mit den Additiven sind, sodass hier positive Wechselwirkungen zu erwarten sind, die zu deren vollflächigen Benetzung beitragen.

Insbesondere ist es bevorzugt, dass die Stoffmengen der permanenten Trennschicht gemessen mittels XPS in Atom % (at-%) für

| | |
|---|---|
| O: | 22 - 37 at-%, bevorzugt 22 - 32,5 at-%, weiter bevorzugt 22 - 30 at-% |
| Si: | 22 - 28 at-%" |
| C: | 38 - 55 at-%, bevorzugt 42 - 55 at-%, |

betragen jeweils bezogen auf die Gesamtzahl aller mit XPS messbaren in der Schicht enthaltenen Atome.

Unabhängig von dem zuvor Gesagten oder zusätzlich dazu, sind insbesondere solche permanenten Trennschichten bevorzugt, wie sie in der WO 2007/118905 A1 offenbart sind. Hier wird insbesondere auf die Ausgestaltungsformen in den Ansprüchen 1 - 9 verwiesen, die auf diesem Wege Bestandteil der vorliegenden Anmeldung werden.

Ebenfalls als erfindungsgemäß einzusetzende permanente Trennschicht bevorzugt, sind Schichten aus der deutschen Patentanmeldung mit dem Amtsaktenzeichen DE 10 2013 219 331.9. Hierbei wird insbesondere auf die Ausgestaltungsformen der plasmapolymeren Schichten gemäß den Ansprüchen 1 - 7 in den ursprünglich eingereichten Unterlagen verwiesen. Teil der Erfindung ist auch die Verwendung eines erfindungsgemäß einzusetzenden Additivs zur Verbesserung der Trennfähigkeit eines Polyurethanformteiles von einer Form mit einer erfindungsgemäß einzusetzenden Oberfläche im Bereich der für die Formgebung vorgesehenen Fläche.
Bevorzugt ist dabei, dass bei dieser Verwendung kein Trennmittel (weder ein externes noch ein internes) eingesetzt wird.
Wie bereits oben beschrieben, lassen sich durch die erfindungsgemäße Verwendung überraschenderweise eine Vielzahl von Vorteilen erzielen.
Teil der Erfindung ist ferner eine Anordnung aus einem Polyurethanformteil, hergestellt unter Zugabe eines erfindungsgemäß einzusetzenden Additivs in einer Form, wie sie ebenfalls erfindungsgemäß einzusetzen ist. Hier ist es ebenfalls bevorzugt, dass diese Anordnung keine Trennmittel (weder ein externes noch ein internes) umfasst.
Wie oben beschrieben, ist der Vorteil dieser erfindungsgemäßen Anordnung, dass sich Form und Formteil leicht trennen können, wobei aufgrund der Ausgestaltung beider Teile (Form und Formteil) die Trennungswirkung der Form so erhalten bleibt, dass eine Vielzahl von weiteren Entformungsvorgängen, insbesondere mit gleichartig gestalteten Formkörpern möglich ist.

### Beispiele

### Beispiel 1:

Dieses Beispiel dient der Darstellung der Unterschiede zwischen klassischen internen Trennmitteln und den erfindungsgemäßen Additiven (hier BYK-377, Hersteller BYK Chemie GmbH, Wesel)).

Ein Additiv mit den geforderten Eigenschaften wurde am Beispiel von drei PUR-Rezepturen geprüft, welche sich ohne Zusatz schwer bzw. gar nicht in Gegenwart einer plasmapolymeren Trennschicht (Gradientenschicht nach DE 10 034 737 A1 mit einer Oberflächenenergie von 22,2 mN/m und einem E-Modul der trennaktiven Deckschicht von ca. 0,8 GPa) trennen ließen. Die Ursache für die hohen Haftkräfte am Beispiel der Rezeptur "PUR1" (Zusammensetzung siehe Beispiel 2) war auf das eingesetzte Polyol zurückzuführen. Rezeptur "PUR 20" (Zusammensetzung siehe Beispiel 2) ließ sich auf Grund des eingesetzten Katalysators gar nicht entformen. Dieses Verhalten zeigt auch "PUR 4" (Zusammensetzung siehe Beispiel 2) welches eine Kombination beider Inhaltsstoffe enthielt. Nach Zusatz des Additivs mit einem Anteil von jeweils 0,5 Gew.% bezogen auf das PUR-System werden die Entformungen in allen Fällen optimiert, ohne dass ein Übertrag auf die plasmapolymere Trennschicht analytisch nachweisbar ist. Zur Prüfung der Rezepturen wurde auf trennbeschichteten Siliziumwafern gehärtet und deren Trennverhalten mit Noten von 1 (sehr leicht trennbar) bis 6 (auch mit Werkzeug nicht trennbar) bewertet. Die Ergebnisse der Entformungsversuche sind im Folgenden tabellarisch dargestellt. Dabei werden jeweils 10 Trennzyklen durchgeführt, soweit möglich.

| **Rezeptur** | **Bemerkung** | **1** | **2** | **3** | **4** | **5** | **6** | **7** | **8** | **9** | **10** |
|---|---|---|---|---|---|---|---|---|---|---|---|
| PUR 1 | | 1 | 2 | 2 | 2 | 2 | 3 | 6 | | | |
| PUR 1* | mit 0,5 Gew.% Additiv | 2 | 2 | 2 | 2 | 2 | 2 | 2 | 2 | 2 | 2 |
| | | | | | | | | | | | |

| **Rezeptur** | **Bemerkung** | **1** | **2** | **3** | **4** | **5** | **6** | **7** | **8** | **9** | **10** |
|---|---|---|---|---|---|---|---|---|---|---|---|
| PUR 20 | | 6 | | | | | | | | | |
| PUR 20* | mit 0,5 Gew.% Additiv | 2 | 2 | 2 | 2 | 2 | 2 | 2 | 2 | 2 | 2 |
| | | | | | | | | | | | |

| **Rezeptur** | **Bemerkung** | **1** | **2** | **3** | **4** | **5** | **6** | **7** | **8** | **9** | **10** |
|---|---|---|---|---|---|---|---|---|---|---|---|
| PUR 4 | | 6 | | | | | | | | | |
| PUR 4* | mit 0,5 Gew.% Additiv | 2 | 2 | 2 | 2 | 2 | 2 | 1 | 1 | 1 | 1 |

Um zu klären, ob der gefundene Effekt ausschließlich auf die Additive ohne Beisein der Trennbeschichtung zurückzuführen ist, wurden entsprechende Prüfungen auf Wafern ohne Trennschicht wiederholt, mit dem Ergebnis, dass die Entformungen in sämtlichen Fällen schon beim ersten Entformungsversuch nicht durchführbar waren. So wird gezeigt, dass das Additiv nicht wie ein klassisches internes Trennmittel wirkt, sondern auf die Anwesenheit einer unpolaren, niederenergetischen Oberfläche angewiesen ist.

Das eingesetzte Additiv ist kommerziell verfügbar und wird als polyethermodifiziertes, hydroxyfunktionelles Polydimethylsiloxan beschrieben, das auf Grund seiner hohen Grenzflächenaktivität die Untergrundbenetzung verbessert, sich an der Oberfläche anreichert und im PUR über seine primären OH-Gruppen fixiert wird. Außerdem verfügt es über eine gute Verträglichkeit mit 2 K PUR-Systemen. Ein Additiv des oben genannten Typs kann beispielsweise durch Pfropfen von hydrosilyl-funktionalisierten Polydimethlysiloxanen mit Polyethylen- und / oder Polypropylenglykol-allylethern hervorgehen und hat dabei eine OH-Zahl zwischen 40 bis 50 mg KOH / g..

### Beispiel 2:

Allen folgenden Messbeispielen ist gemein, dass die verwendeten PUR-Rezepturen frei von zusätzlichen, unbekannten Additiven sind und es sich um wasserfreie Kompaktsysteme handelt. Um die Wasserfreiheit zu gewährleisten, wurde das Polyol bereits Tage zuvor in Gegenwart von Molsieb getrocknet. Bis auf das Polyisocyanat werden alle Rohstoffe zusammengeführt und im Planetenmischer homogenisiert. Mit der anschließenden Zugabe des Polyisocyanates erfolgt ein weiteres Homogenisieren der reaktiven Mischung und die Fadenziehzeit beginnt. Die Reaktivität der Systeme wurde vorab mit Hilfe der zugesetzten Katalysatormenge derart eingestellt, dass sich Fadenziehzeiten zwischen 50 - 70 s ergeben. Diese beinhalten die Mischzeiten von 5 - 10 s.

Die entsprechenden reaktionswarmen Mischungen werden innerhalb der Fadenziehzeit händisch auf raumtemperierte Siliziumwafer gegeben, welche mit einer plasmapolymeren Trennschicht nach nach EP_00841140_A2 mit einer Oberflächenenergie von 22,2 mN/m und einem E-Modul der trennaktiven Deckschicht von ca. 0,8 GPa beschichtet waren. Im Detail kann die Trennschicht wie folgt näher beschrieben werden: Gesamtschichtdicke: 1000 nm, Oberflächenenergie: 22,2 mN/m; polarer Anteil: 0,6 mN/m und E-Modul der Deckschicht: 0,8 GPa.

### PUR Rezepturen ohne Additive

| | **PUR 1** | **PUR 4** | **PUR 20** |
|---|---|---|---|
| | Gewichtsteile | Gewichtsteile | Gewichtsteile |
| Sylosiv A300 (Molsieb) | 4 | 4 | 4 |
| ADDOCAT 726B (Katalysator) | 4 | | |
| DBU (Katalysator) | | 3 | 0,5 |
| Desmophen V 657 (Polyol) | | | 100 |
| Baygal K55 (Polyol) | 100 | 100 | |
| Desmodur VP 20RE10 (Polyisocyanat) | 86,3 | 86,3 | 57,2 |

Nach einer Aushärtezeit der PUR-Vergussmasse von 15 Minuten werden die so entstandenen, außergewöhnlich glatten Musterbauteile von der Trennschichtoberfläche abgenommen und mittels XPS näher untersucht.

Um den Einfluss der Additive zu ermitteln, welche der Polyolkomponente (Mischung aller Rohstoffe ohne Polyisocyanat) zugegeben werden, wird einerseits unmittelbar die erzeugte Oberfläche mittels XPS untersucht, als auch das Innere des jeweiligen Polymeren (Bulk). Die Präparation der Bulkproben erfolgte über spezielle Schnitttechniken, welche der Fachmann verwendet, um eine Kontamination der zu untersuchenden Oberfläche durch den Schneidvorgang zu vermeiden.

Für diese Untersuchung der chemischen Zusammensetzung der Festkörperoberflächen werden aus den PUR-Bauteilen Analyten, (im folgenden Proben) genannt, entnommen, in einem Vakuum-Rezipienten, der als Schleuse dient, binnen einiger Stunden von Atmophärendruck auf etwa 10E-7 hPa gepumpt und schließlich bei einem Druck von 1E-9 hPa in einer XPS-Analysenkammer an mehreren Oberflächenpositionen untersucht. Dabei erfordert die Untersuchung einer einzelnen Oberflächenposition zwischen etwa einer Stunde und mehreren Stunden, je nachdem ob im Wesentlichen die Elementzusammensetzung oder auch die von der chemischen Umgebung von Photoelektronenemittern (Atomen, Ionen) beeinflussten Signalformen detailliert gemessen werden.

Die Entnahme von Proben aus den PUR-Bauteilen für die Oberflächenuntersuchung mittels XPS erfolgt in mehreren Schritten vor dem Einbau ins Vakuumsystem, die nachfolgend zur Probenpräpartion gezählt werden. Im ersten Schritt erfolgt ein laterales Zurechtschneiden eines etwa 5cm breiten Bauteilausschnitts, aus dem die Probe entnommen werden soll. Dieses Zurechtschneiden erfolgt händisch und mit geringem Wärmeeintrag in die Schneideregion, zum Beispiel mit einer Handsäge. Eine deutliche Temperaturerhöhung der Bauteilausschnitts und insbesondere der Probe wird vermieden.

Bei mehr als 4mm dicken Bauteilausschnitten erfolgt anschließend ein Heraustrennen des lateral zurechtgeschnittenen Bauteilausschnitts durch einen in mindestens 3mm Abstand von der Bauteilausschnittoberfläche ausgeführten Schnitts parallel zur Bauteilausschnittoberfläche. Eine Verformung der Bauteilausschnittoberfläche wird vermieden.

Für die Präparation von maximal 4mm dicken und maximal 8mm breiten Proben für die XPS-Untersuchungen wird nachfolgend zwischen Proben für die Untersuchung der Bauteilausschnittsoberflächenzusammensetzung und Proben für die Untersuchung der trennend freigelegten Oberflächen, nachfolgend Trennflächen genannt, unterschieden.

Die Präparation von Proben für die Untersuchung der Bauteilausschnittsoberflächenzusammensetzung erfolgt durch ein weiteres laterales Zurechtschneiden der etwa 5 cm breiten Bauteilausschnitte. Dazu kann eine abgerundete Skalpellklinge (z.B. eine gehärtete Kohlenstoffstahlskalpellklinge 19 der Firma BAYHA GmbH, Tuttlingen) senkrecht zur Bauteilausschnittsoberfläche angesetzt und der Schnitt durchgeführt werden.

Die Präparation von Proben für die Untersuchung von Trennflächen erfolgt in einer von drei unterschiedlichen mechanischen Vorgehensweisen schneidend oder schabend mittels einer abgerundeten Skalpellklinge (z. B. eine gehärtete Kohlenstoffstahlskalpellklinge 19 der Firma BAYHA GmbH, Tuttlingen), die in flachem Winkel zur Bauteilausschnittsoberfläche geführt wird, oder mittels eines wasserfesten Schleifpapiers (z.B. Schleifpapier mit Siliziumcarbid-Körnern der Körnung 800). Im Einzelnen erfolgt die schneidende Präparation von Trennflächen so, dass die Skalpellklinge in flachem Winkel von etwa 30° zur Oberfläche der Bauteilausschnittsoberfläche angesetzt und händisch keilartig mit einer Geschwindigkeit von etwa 1mm/s in das PUR-Material eingedrückt wird, wobei vorteilhaft eine die Rundung der Klinge nutzende wippende Bewegung ausgeführt wird. Die von der Bauteilausschnittsoberfläche abgetragenen Späne werden etwa 1cm breit und etwa 0,2 mm dick erhalten und sind in sich von der Skalpellklinge weg gewölbt. Mittels XPS wird die dritte so durch Schneiden an der derselben Stelle erhaltene und gewölbte Trennfläche untersucht, mit der offenen Seite der Wölbung zum Probenhalter hin orientiert. Im Einzelnen erfolgt die schabende Präparation von Trennflächen so, dass die Skalpellklinge etwa rechtwinklig zur Oberfläche der Bauteilausschnittsoberfläche angesetzt und in flachem Winkel von weniger als 10° zur Oberfläche der Bauteilausschnittsoberfläche unter Fingerdruck geführt wird. Dabei werden flächendeckend parallel rasternd jeweils etwa 1mm breite und 1cm lange PUR-Späne von der Bauteilausschnittsoberfläche abgeschabt. Diese Prozedur wird wiederholt, wobei die Schabrichtung im Vergleich zur derjenigen des ersten Teilschritts um etwa 90° gedreht erfolgt. Abschließend wird wie beim ersten Teilschritt nochmals flächendeckend geschabt. Dieses Vorgehen wird hier als Kreuzschaben bezeichnet. Im Einzelnen erfolgt die schleifende Präparation von Trennflächen so, dass die Bauteilausschnittsoberfläche unter Fingerdruck in flachem Winkel von weniger als 10° zur Schleifpapieroberfläche geführt wird. Diese Prozedur wird zehn Mal wiederholt. Danach wird Schleifrichtung im Vergleich zur derjenigen der ersten zehn Teilschritte um etwa 90° gedreht erfolgt. Dieses Vorgehen wird hier als Kreuzschleifen bezeichnet.

Die drei unterschiedlichen mechanischen Vorgehensweisen zur Trennflächenpräparation führen unabhängig von der gewählten Vorgehensweise zu im Bereich der Messfehler vergleichbaren XPS-Ergebnissen, die Material-spezifisch sind. Zusätzlich wurden zwecks Identifikation und Vergleich die reinen Additive bzw. Trennmittel mittels XPS untersucht:

| | **Bulk** | | | | |
|---|---|---|---|---|---|
| | **O** | **N** | **C** | **Si** | **Al** |
| | at% | at% | at% | at% | at% |
| **PUR 1** | 18,1 | 5,5 | 76,1 | 0,2 | 0,2 |
| **PUR 4** | 17,9 | 5,2 | 76,5 | 0,2 | 2 |
| **Silikontrennmittel** (nicht einbaufähig) | 21,7 | 0,0 | 57,8 | 20,5 | 0 |
| **erfindungsgemäßes Additiv** (einbaufähig) | 25,3 | 0,0 | 61,0 | 13,7 | 0 |

Additiv: Siehe Angaben unter Beispiel 1 Silikontrennmittel: X-22-3710, Hersteller Shin-Etsu Chemical Co., Ltd., Tokyo, Japan

### Messbeispiel 1

Für dieses Beispiel wurde dem PUR 1 das nicht einbaufähige Silikontrennmittel bzw. ein erfindungsgemäßes Additiv mit einer Menge von 0,5 Gewichts-% zugegeben. Die XPS-Messung wurde an 2 unterschiedlichen Stellen durchgeführt, um einen Eindruck von der Homogenität der ermittelten Zusammensetzung zu bekommen.

| | | | **Bulk** | | | | |
|---|---|---|---|---|---|---|---|
| | | | **O** | **N** | **C** | **Si** | **Al** |
| | | | at% | at% | at% | at% | at% |
| PUR 1 + | Erf. Additiv | 0,50% | 18,6 | 5,2 | 75,5 | 0,4 | 0,2 |
| PUR 1 + | Erf. Additiv | 0,50% | 18,5 | 4,9 | 75,8 | 0,6 | 0,3 |
| PUR 1 + | Silikonadditiv | 0,50% | 21,8 | 1,9 | 61,6 | 14,7 | 0 |
| PUR 1 + | Silikonadditiv | 0,50% | 22,2 | 1,7 | 62,4 | 13,7 | 0 |

### Die Messungen zeigen:

Die Zusammensetzung des Bulkmaterials wird durch die Zugabe des erfindungsgemäßen Additivs praktisch nicht verändert. Dies ist aufgrund der geringen Konzentration auch nicht zu erwarten. Auffallend ist dagegen die starke Veränderung des PUR 1 durch das Silikontrennmittel. Hier steigt das Siliziumsignal stark an, ebenso nimmt der Sauerstoff zu. Stickstoff, Kohlenstoff und Aluminium werden dagegen in geringerer Konzentration gemessen. Es besteht eine große Übereinstimmung mit dem XPS-Signal des Silikontrennmittels.

Dieses Messergebnis kann so verstanden werden, dass das Silikontrennmittel in der PUR-Matrix nicht chemisch gebunden ist und derart mobil bleibt, dass es an die frisch freigelegte Messstelle migriert (wandert), bevor die Messapparatur mit der Messung starten kann. Das erfindungsgemäße Additiv weist dieses Verhalten erwartungsgemäß nicht auf, da es aufgrund seiner Funktionalität fest in die Matrix eingebunden wird.

### Messbeispiel 2

Im Vergleich zu Messbeispiel 1 wurde hier dem PUR 4 ein erfindungsgemäßes Additiv mit einer Menge von 1,5 Gewichts-% zugegeben. Die XPS-Messung wurde an 2 unterschiedlichen Stellen durchgeführt, um einen Eindruck von der Homogenität der ermittelten Zusammensetzung zu bekommen.

| | | | **Bulk** | | | | |
|---|---|---|---|---|---|---|---|
| | | | **O** | **N** | **C** | **Si** | **Al** |
| | | | at% | at% | at% | at% | at% |
| PUR 4 + | Erf. Additiv | 1,50% | 18,5 | 5 | 75,8 | 0,4 | 0,2 |
| PUR 4 + | Erf. Additiv | 1,50% | 18,5 | 5 | 75,7 | 0,4 | 0,3 |

### Die Messungen zeigen:

Die Zusammensetzung des Bulkmaterials wird durch die Zugabe des erfindungsgemäßen Additivs auch in einer deutlich erhöhten Konzentration praktisch nicht verändert. Eine Migration des Additivs an die Schnittoberfläche findet nicht statt.

### Messbeispiel 3

Dieses Messbeispiel betrachtet die abgeformte Polyurethanoberfläche. Auch hier sind wieder jeweils 2 Messungen an unterschiedlichen Stellen durchgeführt worden, um die Homogenität der Messung beurteilen zu können. Ferner sind mehrere Entformungen auf dem gleichen mit der Trennschicht versehenen Wafer durchgeführt worden. Die Anzahl der Entformungen ist in Spalte 4 angegeben.

| | | | | **Entformungsoberfläche PUR** | | | |
|---|---|---|---|---|---|---|---|
| | | | Anzahl der Entformungen | **O** | **N** | **C** | **Si** |
| | | | | at% | at% | at% | at% |
| PUR 1 + | Erf. Additiv | 0,50% | 1 | 21,1 | 3,4 | 69,4 | 6,1 |
| PUR 1 + | Erf. Additiv | 0,50% | 1 | 21,0 | 3,3 | 69,5 | 6,1 |
| | | | 3 | 21,0 | 3,3 | 69,4 | 6,3 |
| | | | 3 | 21,1 | 3,3 | 69,4 | 6,3 |
| | | | 5 | 20,9 | 3,6 | 69,6 | 5,9 |
| | | | 5 | 20,7 | 3,5 | 69,7 | 6,0 |
| | | | 7 | 21,2 | 3,5 | 69,3 | 6,1 |
| | | | 7 | 20,3 | 3,5 | 69,9 | 6,3 |
| | | | 9 | 20,7 | 3,3 | 69,8 | 6,2 |
| | | | 9 | 20,7 | 3,1 | 70,0 | 6,3 |
| PUR 1 + | Silikon trenn mittel | 0,50% | 1 | 21,7 | 2,4 | 63,7 | 12,2 |
| PUR 1 + | Silikon trenn mittel | 0,50% | 1 | 20,7 | 2,1 | 65,1 | 12,1 |
| | | | 3 | 20,9 | 2,4 | 65,4 | 11,4 |
| | | | 3 | 21,2 | 2,3 | 65,0 | 11,6 |
| | | | 5 | 20,9 | 2,6 | 65,8 | 10,8 |
| | | | 5 | 21,1 | 2,6 | 64,4 | 11,9 |
| | | | 7 | 20,7 | 2,5 | 66,0 | 10,7 |
| | | | 7 | 20,6 | 2,6 | 66,4 | 10,5 |
| | | | 9 | 20,8 | 2,5 | 65,7 | 11,0 |
| | | | 9 | 20,7 | 2,7 | 66,0 | 10,5 |

Alle Messungen zeigen eine sehr hohe Konstanz der Ergebnisse über die Anzahl der Entformungen ganz unabhängig vom verwendeten Additiv/Trennmittel.

Für das Silikontrennmittel ergibt sich praktisch die gleiche Oberflächenzusammensetzung, wie für Messbeispiel 1 im präparierten Bulkmaterial.

Erwartungsgemäß migriert dieses Trennmittel auch an die Bauteiloberfläche und kann letztendlich dort die Trennwirkung befördern.

Auch das erfindungsgemäße Additiv ist Oberflächenaktiv. Das Siliziumsignal ist deutlich erhöht und das Stickstoffsignal abgeschwächt. Der Sauerstoffanteil ist ebenso wie der Kohlenstoffanteil durch die Anwesenheit des Additivs leicht verändert. Die Oberflächenenergie wird von 39,5 mN/m auf ca. 24,5 mN/m abgesenkt.

### Beispiel 3:

In diesem Beispiel wird gezeigt, dass es sinnvoll ist, für den erfolgreichen Einsatz des erfindungsgemäßen Additivs geeignete Trennschichten zu verwenden. (Additiv und Trennschicht sollten aneinander angepasst sein, insbesondere soll allgemein die Oberflächenenergie beider Partner so beschaffen sein, dass das Additiv die Trennschicht vollständig benetzen kann). Daher wurden alternativ zur Trennschicht in den Messbeispielen weitere vier Varianten mit abgestuften Eigenschaftengemäß der allgemeinen Anleitung aus der Patentanmeldung mit dem deutschen Aktenzeichen DE 102013219331.9 eingestellt. Zusätzlich wurde das Trennverhalten auf einem unbeschichteten Wafer begutachtet.

| **Trennschicht** | **Oberflächen-energie** | **pol. Anteil** | **E-Modul** | **Trennverhalten** |
|---|---|---|---|---|
| | **[mN/m]** | **[mN/m]** | **[GPa]** | |
| **Messbeispiele** | 22,2 | 0,6 | 0,8 | sehr leichte Trennung |
| **Variante 1** | 23,0 | 1,4 | 1,5 | leichte Trennung |
| **Variante 2** | 24,0 | 1,7 | 1,5 | mäßige Trennung |
| **Variante 3** | 25,0 | 2,5 | 2,2 | keine Trennung |
| **Variante 4** | 29,8 | 4,0 | 11,4 | keine Trennung |
| **ohne Trennschicht** | 54,9 | 26,8 | ca. 80 | keine Trennung |

Das erfindungsgemäße Additiv kann mit einer Oberflächenenergie von ca. 20,5 mN/m alle Trennschichtoberflächen benetzen. Allerdings ist es hilfreich, wenn die bereit gestellte Oberfläche einen sehr geringen polaren Anteil aufweist. Dadurch wird gewährleistet, dass sich das Additiv nicht mit seinen polaren Seitenketten mit reaktiver Gruppe der Trennschicht zuwendet und ggf. dort noch reagiert.

## Patentansprüche

1. Verfahren zur Herstellung eines Polyurethanformteiles, umfassend die Schritte:
a) Bereitstellen einer Reaktionsmischung, die zu Polyurethan reagieren kann,
b) Bereitstellen einer Form zur Formgebung des Polyurethanformteiles, wobei die Form im Bereich der für die Formgebung vorgesehenen Fläche über eine Oberflächenenergie von ≤ 24,8 mN/m und/oder über einen polaren Anteil der Oberflächenenergie von ≤ 2,0 mN/m verfügt, jeweils gemessen nach DIN55660-2 vom Dezember 2011.
c) Bereitstellen eines Additivs der allgemeinen Formel (I), (II), (III) oder (IV) mit 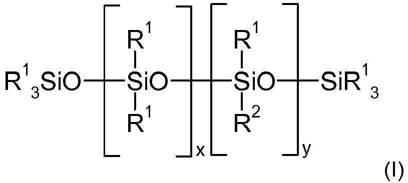 wobei
jeder R¹ unabhängig von den anderen einen Alkylrest mit 1 bis 18 Kohlenstoffatomen oder einen Arylrest bedeutet,
R² einen der Reste oder 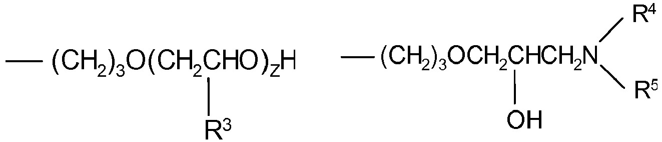
bedeutet,
jeder R³ unabhängig von den anderen Wasserstoff oder einen Alkylrest bedeutet,
jeder R⁴ und jeder R⁵ unabhängig voneinander und von den anderen jeweils einen Kohlenwasserstoffrest bevorzugt mit 1 bis 18 C - Atomen oder ein hetrerocyclisches Ringsystem mit mindestens einem Stickstoffatom und bevorzugt 3 bis 17 C - Atomen bedeuten,
x eine Zahl von 5 bis 90 darstellt,
y eine Zahl von 1 bis 5 darstellt und
z eine Zahl von 1 bis 25 darstellt
oder 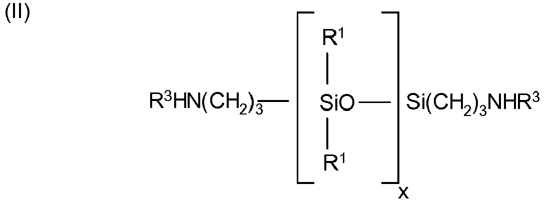
wobei R¹ und R³ die oben beschriebene Bedeutung haben und
x eine Zahl von 10 bis 65 darstellt
oder 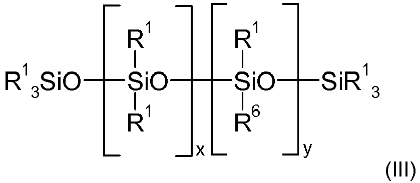
wobei R¹ und y die oben beschriebene Bedeutung haben,
jeder R⁶ unabhängig von den anderen einen Rest
-(CH₂)₃NHR⁷
darstellt,
jeder R⁷ unabhängig von den anderen H oder einen Rest
-(CH₂)₂NH₂
darstellt und
x eine Zahl von 5 bis 90, vorzugsweise 10 bis 65 darstellt
oder
(IV) HO(CH₂CH₂O)ₙCH₂CF₂O(CF₂CF₂O)ₚ(CF₂O)_{q}CF₂CH₂(OCH₂CH₂)ₙOH
wobei
n eine Zahl von 1 bis 20 darstellt und
p und q unabhängig voneinander Zahlen von 1 bis 20 darstellen
d) Mischen des Additivs mit der Reaktionsmischung und
e) Aushärten der in Schritt d) erzeugten Mischung in der Form.

2. Verfahren nach Anspruch 1, wobei das Additiv eine Molmassenverteilung (Zahlenmittel) von 150 bis 15.000 Dalton besitzt.

3. Verfahren nach Anspruch 1 oder 2, wobei für das Additiv das Zahlenmittel der Molmasse 2.000 - 5.000 Dalton ist.

4. Verfahren nach einem der vorangehenden Ansprüche, wobei die OH-Zahl des Additivs 30 - 60 KOH/g ist.

5. Verfahren nach einem der vorangehenden Ansprüche, wobei kein Trennmittel eingesetzt wird.

6. Verfahren nach einem der vorangehenden Ansprüche, wobei die Form im Bereich der für die Formgebung vorgesehenen Fläche eine zu einem Festkörper vernetzte permanente Trennschicht besitzt.

7. Verfahren nach einem der vorangehenden Ansprüche, wobei die permanente Trennschicht eine plasmapolymere Schicht ist.

8. Verfahren nach einem der vorangehenden Ansprüche, wobei die permanente Trennschicht aus C, O, N, Si und/oder H besteht.

9. Verfahren nach einem der Ansprüche 6-8, wobei die Stoffmengen der permanente Trennschicht gemessen mittels XPS (X-ray Photoelectron Spectroscopy) für
O: 22 - 37 at-%,
C: 38 - 55 at-%
betragen, jeweils bezogen auf die Gesamtzahl aller mit XPS messbaren in der Schicht enthaltenen Atome.

10. Verwendung eines Additiv wie in einem der Ansprüche 1 bis 4 definiert zur Verbesserung der Trennfähigkeit eines Polyurethanformteiles von einer Form wie in einem der Ansprüche 1 oder 6 bis 9 definiert.

11. Verwendung nach Anspruch 10, wobei kein Trennmittel eingesetzt wird.

12. Anordnung aus einem Polyurethanformteil, hergestellt unter Zugabe eines Additiv wie in einem der Ansprüche 1 bis 4 definiert in einer Form wie in einem der Ansprüche 1 oder 6 bis 9 definiert.

13. Anordnung nach Anspruch 12, wobei die Anordnung kein Trennmittel umfasst.

## Claims

1. Process for producing a polyurethane molded part, comprising the steps of:
a) providing a reaction mixture capable of reacting to polyurethane,
b) providing a mold for shaping the polyurethane molded part, wherein the mold in the area of the surface intended for the molding exhibits a surface energy of ≤ 24.8 mN/m and/or a polar share of the surface energy of ≤ 2.0 mN/m, each measured according to DIN55660-2 of December 2011.
c) providing an additive of the general formula (I), (II), (III) or (IV) with 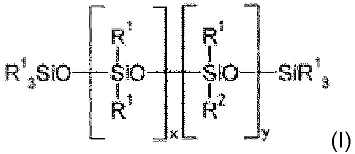 wherein
each R¹ independently of the others denotes an alkyl residue having 1 to 18 carbon atoms or an aryl residue,
R² represents one of the residues or 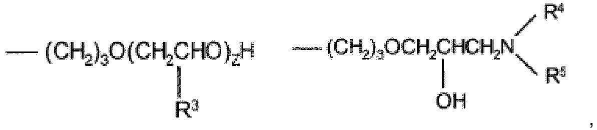
each R³ independently of the others denotes hydrogen or an alkyl residue,
each R⁴ and each R⁵ independently of each other and of the others denotes a hydrocarbon residue, respectively, preferably having 1 to 18 C - atoms or a hetrerocyclic ring system having at least one nitrogen atom and preferably 3 to 17 C - atoms,
x represents a number of 5 to 90,
y represents a number of 1 to 5, and
z represents a number of 1 to 25,
or 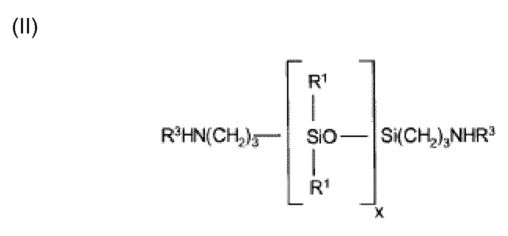 wherein
wherein R¹ and R³ have the meaning described above, and
x represents a number of 10 to 65,
or 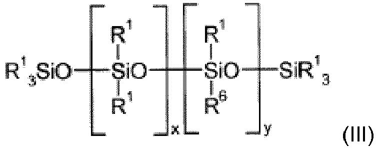
wherein R¹ and y have the meaning described above,
each R⁶ independently of the others represents a residue
-(CH₂)₃NHR⁷,
each R⁷ independently of the others represents H or a residue
-(CH₂)₂NH₂,
and
x represents a number of 5 to 90, preferably 10 to 65,
or
(IV) HO(CH₂CH₂O)ₙCH₂CF₂O(CF₂PF₂O)ₚ(CF₂O)_{q}CF₂CH₂(OCH₂CH₂)ₙOH
wherein
n represents a number of 1 to 20, and
p and q independently of each other represent a numbers of 1 to 20,
d) mixing the additive with the reaction mixture, and
e) curing the mixture produced in step d) in the mold.

2. The process according to claim 1 wherein the additive has a molecular weight distribution (number average) of 150 to 15,000 dalton.

3. The process according to claim 1 or 2, wherein for the additive, the number average of the molecular weight is 2,000 - 5,000 dalton.

4. The process according to any one of the preceding claims, wherein the OH number of the additive is 30 - 60 KOH/g.

5. The process according to any one of the preceding claims, wherein no release agent is applied.

6. The process according to any one of the preceding claims, wherein the mold in the area of the surface intended for the molding has a permanent separating layer cross-linked to a solid state body.

7. The process according to any one of the preceding claims, wherein the permanent separating layer is a plasma polymeric layer.

8. The process according to any one of the preceding claims, wherein the permanent separating layer consists of C, O, N, Si and/or H.

9. The process according to any one of the preceding claims 6-8, wherein the amounts of substances of the permanent release layer measured by XPS (%-ray photoelectron spectroscopy) are for
O: 22 - 37 at.-%,
C: 38 - 55 at.-%,
in each case based on the total number of all XPS measurable atoms comprised in the layer.

10. A use of an additive as defined in any one of the claims 1 to 4 for improving the releasability of a polyurethane molded article from a mold as defined in any one of the claims 1 or 6 to 9.

11. The use according to claim 10, wherein no release agent is applied.

12. Configuration of a polyurethane molded part prepared by adding an additive as defined in any one of the claims 1 to 4 in a form as defined in any one of the claims 1 or 6 to 9.

13. Configuration according to claim 12, wherein the configuration does not comprise a release agent.

## Revendications

1. Procédé servant à fabriquer une pièce moulée en polyuréthane, comprenant les étapes suivantes :
a) la mise à disposition d'un mélange de réaction, qui peut réagir par rapport au polyuréthane,
b) la mise à disposition d'un moule aux fins de la mise en forme de la pièce moulée en polyuréthane, dans lequel le moule dispose, dans la zone de la surface prévue pour la mise en forme, d'une énergie surfacique ≤ 24,8 mN/m et/ou d'une fraction polaire de l'énergie surfacique ≤ 2,0 mN/m, respectivement mesurées selon la norme DIN55660-2 de décembre 2011 ;
c) la mise à disposition d'un additif de formule générale (I), (II), (III) ou (IV) avec 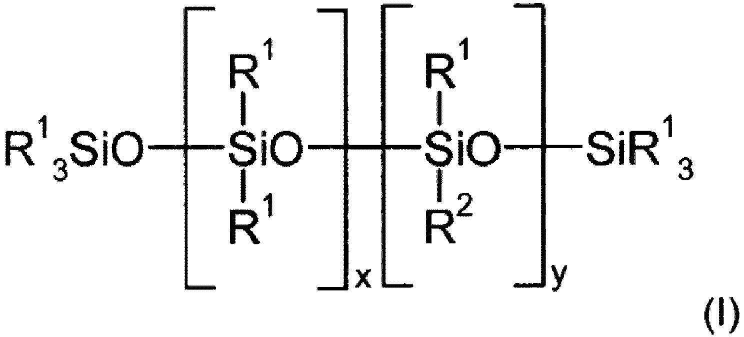 dans lequel
chaque R¹ signifie, indépendamment des autres, un radical alkyle comprenant 1 à 18 atomes de carbone ou un radical aryle,
R² signifie un des radicaux ou 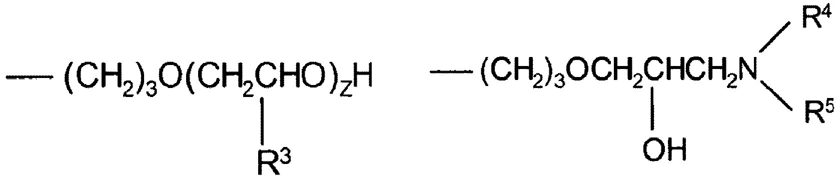
chaque R³ signifie, indépendamment des autres, de l'hydrogène ou un radical alkyle,
chaque R⁴ et chaque R⁵ signifient, indépendamment l'un de l'autre, et des autres, respectivement un radical hydrocarboné, de manière préférée comprenant 1 à 18 atomes de C, ou un système cyclique hétérocyclique comprenant au moins un atome d'azote et de manière préférée 3 à 17 atomes de C,
x représente un nombre allant de 5 à 90,
y représente un nombre allant de 1 à 5, et
z représente un nombre allant de 1 à 25
ou 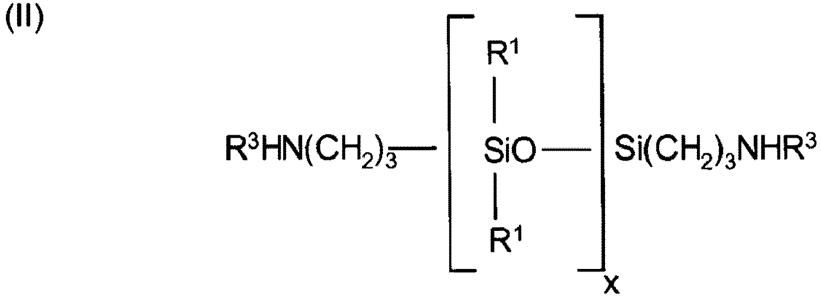
dans lequel R¹ et R³ ont la signification décrite plus haut et
x représente un nombre allant de 10 à 65 ou 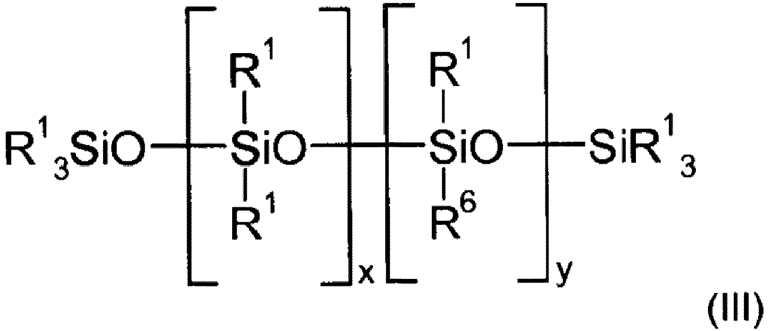
dans lequel R¹ et y ont la signification décrite plus haut,
chaque R⁶ représente, indépendamment des autres, un radical
-(CH₂)₃NHR⁷
chaque R⁷ représente, indépendamment des autres, H ou un radical
-(CH₂)₂NH₂
et
x représente un nombre allant de 5 à 90, de préférence de 10 à 65
ou
(IV) HO(CH₂CH₂O)ₙCH₂CF₂O(CF₂CF₂O)ₚ(CF₂O)_{q}CF₂CH₂(OCH₂CH₂)ₙOH
dans lequel
n représente un nombre allant de 1 à 20 et
p et q représentent, indépendamment l'un de l'autre, des nombres allant de 1 à 20 ;
d) le mélange de l'additif au mélange de réaction ; et
e) le durcissement du mélange produit à l'étape d) dans le moule.

2. Procédé selon la revendication 1, dans lequel l'additif possède une répartition de masse molaire (moyenne en nombre) allant de 150 à 15 000 Dalton.

3. Procédé selon la revendication 1 ou 2, dans lequel la moyenne en nombre de la masse molaire est de 2 000 - 5 000 Dalton pour l'additif.

4. Procédé selon l'une quelconque des revendications précédentes, dans lequel l'indice OH de l'additif est de 30 - 60 KOH/g.

5. Procédé selon l'une quelconque des revendications précédentes, dans lequel aucun agent de séparation n'est employé.

6. Procédé selon l'une quelconque des revendications précédentes, dans lequel le moule possède, dans la zone de la surface prévue pour la mise en forme, une couche de séparation permanente réticulée en un corps solide.

7. Procédé selon l'une quelconque des revendications précédentes, dans lequel la couche de séparation permanente est une couche de plasma polymérisé.

8. Procédé selon l'une quelconque des revendications précédentes, dans lequel la couche de séparation permanente est constituée de C, O, N, Si et/ou H.

9. Procédé selon l'une quelconque des revendications 6 - 8, dans lequel les quantités de matière de la couche de séparation permanente, mesurées au moyen d'une spectrométrie de photoélectrons induits par rayons X (XPS) sont égales à
pour O : 22 - 37 % en atomes,
pour C : 38 - 55 % en atomes,
respectivement par rapport au nombre total de tous les atomes contenus dans la couche pouvant être mesurés à l'aide de la XPS.

10. Utilisation d'un additif tel que défini dans l'une quelconque des revendications 1 à 4 afin d'améliorer la capacité à la séparation d'une pièce moulée en polyuréthane d'un moule tel que décrit dans l'une quelconque des revendications 1 ou 6 à 9.

11. Utilisation selon la revendication 10, dans laquelle aucun agent de séparation n'est employé.

12. Ensemble composé d'une pièce moulée en polyuréthane, fabriqué en ajoutant un additif tel que défini dans l'une quelconque des revendications 1 à 4 dans un moule tel que défini dans l'une quelconque des revendications 1 ou 6 à 9.

13. Ensemble selon la revendication 12, dans lequel l'ensemble ne comprend aucun agent de séparation.
